# EUROPEAN PATENT SPECIFICATION

(11) **EP 3 496 863 B1**
(45) Date of publication and mention of the grant of the patent: **02.09.2026**
(21) Application number: 17790840.7
(22) Date of filing: 04.08.2017
(51) Int. Cl.: B03B 9/06, B02C 18/00, B02C 23/06, G03G 21/10, G03G 21/12

(54) **WASTE TONER RECYCLING PROCESS AND THE POWDER MADE THEREFROM**
VERFAHREN ZUM RECYCLING VON ALTTONERN UND DAS DARAUS HERGESTELLTE PULVER
PROCÉDÉ DE RECYCLAGE DE DÉCHETS DE TONER ET POUDRE OBTENUE À PARTIR DE CELUI-CI

(30) Priority: 12.08.2016 HR 20161013
(43) Date of publication of application: 19.06.2019
(73) Proprietor: SPECTRA-MEDIA D.O.O., 10000 Zagreb (HR)
(72) Inventor: MUJKI , Kerim, 10000 Zagreb (HR)
(74) Representative: Kusalic, Ivan
(86) International application number: PCT/HR2017/000012
(87) International publication number: WO 2018/029497

(56) References cited:
- DE-A1- 19 520 365
- GB-A- 190 704 190
- JP-A- 2004 066 123
- US-A1- 2010 086 337
- US-A1- 2013 058 680

## Description

### 1. The technical area to which the invention relates

This invention is related to the process of recycling the waste toner and powder which is made by recycling, associated with crushing or splitting

### 2. A technical problem whose solution requires patent protection

Waste is a problem of today and due to the lack of raw materials and the need for environmental protection it is necessary to process and exploit its valuable properties. Waste toners are a specific kind of waste that contains valuable materials such as metals, plastics, non-metals. Waste toners also contain residues of toner powder that is not consumed in the containers. The usual recycling process is their shredding in mills of different types and separations by standard procedures. However, due to increased knife temperatures and the release of toner powder containing carbon dust particles, explosions often occur in recycling devices. Furthermore, waste powder after separation of metals, plastics and non-metals cannot be used and is still waste. It must either be put off or burned, which is the cost of waste toner processing.

### 3. Technical state

Waste toners are often found in devices (waste printers and duplicating devices) and are recycled together (not separately). Recycling is performed in recycling lines (devices) with different cutting methods (knives of different designs, rotating chains ..). After mechanical shredding, various separation processes separate useful components and waste toner powder. Explosion prevention is carried out with increased attention to waste dispensing, shredding under controlled indoor conditions in the nitrogen atmosphere, and manually removing waste toners from waste printers and duplicating devices. Waste powder is a hazardous waste and as such it has to be further disposed of (by putting it off or burning it). Separately disposed waste toners are recycled in devices that have controlled conditions in the shredding compartment (nitrogen atmosphere) or are not recycled, but burned. When shredding waste toners, different ways of cutting can be used.

### Relevant background art

The following documents have been cited in the international search report.
D1 - US 2013/0058680 A1(VINES ROBERT [US] ET AL) 7 March 2013, (2013-03-07)
   D1 discloses a thermal agglomeration process for residual toner in laser printer cartridges. Airborne toner dust generated during cartridge recycling creates health and explosion hazards. To address these risks, toner cartridges are heated in a heated chamber or kiln to solidify residual toner before further processing.
D2 - JP 2004-066123 A (CANON KK) 4 March 2004 (2004-03-04)
   D2 discloses a method and apparatus for crushing toner cartridges and recovering toner powder. To reduce the risk of dust explosion, method proposes crushing toner cartridges in a controlled or inert gas atmosphere and subsequently separating toner from crushed materials by vibration or impact.
D3 - DE 195 20 365 A1 (ELGES WILHELM [DE]) 12 December 1996 (1996-12-12)
   D3 discloses a method for recycling toner cartridges using solvents to dissolve toner residues. Toner dust residues are dissolved using solvents such as methyl salicylate and/or terpene-based solvents, enabling safe mechanical comminution of cartridges without explosion risk.
D4 - US 2010/0086337 A1 (SABE YOSHIMITSU . [JP]) 8 April 2010 (2010-04-08)
   D4 discloses equipment for processing waste toner cartridges using crushing while spraying water and subsequent wastewater treatment and separation. The system uses water spraying and liquid treatment to prevent dust formation and explosion hazards during crushing.
D5 - GB 04190 A A.D. 1907 (SIMCOCK ERNEST OLIVER) 2 January 1908 (1908-01 -02)
   D5 discloses a method for preventing explosions of coal dust. Calcium carbonate or similar carbonates may be mixed with coal dust so that, when heated during an explosion, carbon dioxide is released to suppress flame propagation.

### 4. Summary of the invention essence

The two **primary objectives** of the present invention are:
- Enable recycling (shredding) of waste toners, with no risk of explosion
- produce a mixture which contains recycled powder that can be used in industry as a raw material (convert hazardous waste to useful raw materials)

This patent comprises:
- Waste toner recycling process by shredding and sifting with addition of additives and the production of recycled powder
- 5-12% addition of calcite additive to total waste mass of waste toner immediately before shredding of waste toner in the normal atmosphere
- powder produced by recycling, containing a mixture of calcium and waste toner powder which is used in industry, containing a mass portion 3-35% Ca and 6-40% TOC* for the composition of waste powder.

The **secondary objective** is to harmonize the recycling of waste toners with the requirements of sustainable development and the circular economy.

The waste toner shredding in the present invention encompasses the dosing of additives just prior to mechanical shredding in the open atmosphere, thereby completely eliminating the possibility of explosion and reducing processing costs. The shredding method of waste toners is not the subject of this invention. After the shredding, mixed shredded parts of waste toner and calcite are sifted through the sieve. Sifting method is not a subject of the present invention. Shredded parts can be further separated by various separation processes and are not subject to the present invention. The resulting recycled powder can be used in the bitumen production industry, asphalt industry, casting industry, concrete industry and polymer industry.

The invention is defined by the claims.

### 5. Brief picture description

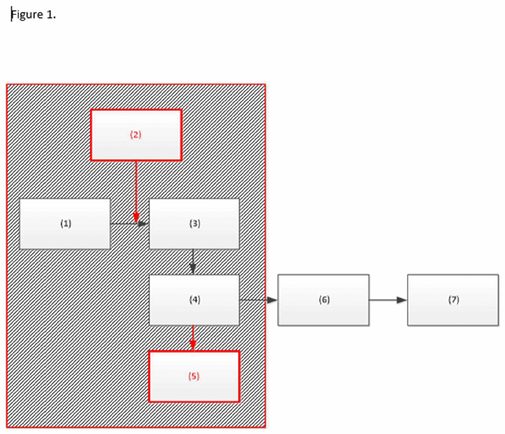

Figure. 1 shows the process of recycling the waste toners with the addition of the additives which includes shredding and sifting. Parts of the process which are included in the invention are marked, including the additive and it dozing place and the final product - recycling powder, i.e. mixture of calcite and waste toner powder.

### 6. Detailed description

This invention encompasses the process of recycling waste toners 1. The waste toners 1 are dozed to device for mechanical shredding 3. Immediately before putting the waste toners 1 in the device for shredding, the additive is dozed 2 which is by its composition natural grinded Calcium carbonate - calcite - CaCO3. Additive 2 is added in the amount of 5-12% of the total mass of waste toners which enters in the processing process. The process of adding the additives 2 and mechanical shredding 3 takes part in the normal atmosphere which is possible due to adding of the additive 2 which totally eliminates the possibility of an explosion. The shredding method of waste toners is not the subject of this invention. After the mechanical shredding 3, the mixed shredded part of the waste toner and the additive 2 are sifted 4 through the sieve. Sifting method is not a subject of the present invention. The shredded parts 6 can further be disparted with different processes of separation 7 and are not a subject of the present invention. The separated powder which is made by recycling 5 is the mixture of additive calcite and waste toner powder and has the following characteristics:
Ca mass part [%] 3-35%
Mass part of C as TOC*[%]: 6-40%
*TOC ⁼ total organic carbon (engl. total organic carbon)

The powder particles which is made by recycling 5 is <500 µm.

### 7. The method of industrial or other application of the invention

The present invention will allow recycling or exploitation of valuable solvents properties of the waste toners. The recycling process which is the subject of the present invention will allow mechanical shredding to take place without the risk of explosion due to the addition of calcite additives in an open atmosphere. By applying the present invention it is not necessary to apply mechanical shredding of waste toners in an inert controlled atmosphere, which makes the process of recycling the waste toners so much cheaper.

Furthermore, the present invention will provide the generation of waste powder which is a mixture of calcite additives and waste toner powder, which has its usable value, as opposed to the waste toner powder itself produced by conventional waste toner treatment methods.

By using the present invention, waste toner can be recycled easier and cheaper and without the risk of explosion, and it is possible to utilize all output components after recycling.

This invention enables the realization of all requirements of the circular economy.

### 8. List of used reference signs

(1) Waste toners
(2) Calcite additive
(3) Device for mechanical shredding
(4) Device for sifting
(5) Powder which is made by recycling
(6) Shredded waste toner
(7) Further separation of the shredded waste toner

### 9. Summary of invention

Waste toners are a type of waste that contains materials such as (non) metals, plastic, but also toner powder that is not consumed in the containers. To date, this powder has not been used because of the high risk of explosion during processing.

This invention encompasses the process of recycling waste toners (1) in a way that they are dozed to device for mechanical shredding (3) with the adding of the additive (2) which is by its composition Calcium carbonate - calcite - CaCO3 CAS number 471-34-1, in the amount of 5-12% of the total mass of waste toners all in the normal atmosphere. After the mechanical shredding (3), the mixed shredded part of the waste toner and the additive (2) are sifted (4) through the sieve. Resulting waste powder contains mass part of Calcium 3-35% and mass part of TOC* 6-40% powder particle size <500 µm.

The recycling process which is the subject of this invention allows the mechanical shredding to happen in the open atmosphere without the risk of explosion due to adding the additive calcite.

## Claims

1. A procedure of recycling waste toners (1) wherein the procedure includes the mechanical shredding in the device for mechanical shredding (3) in open atmosphere and sifting in the device for sifting (4) of shredded waste toners (6) **is characterized by** that immediately before putting the waste toners (1) in the device for mechanical shredding (3), the additive calcite (2) is added to eliminate the possibility of explosion in the 5%-12% of total mass of waste toners (1) which enters into process of mechanical shredding in the device for manual shredding (3), and after the sifting in device for manual sifting (4) by recycling, a powder is made (5) which is a mixture of additives and waste toner powder.

2. A powder which is made by recycling waste toners in accordance with the procedure according to claim 1, **characterized in that** the powder contains the mass part of Calcium 3-35% and mass part of total organic carbon 6-40% and that the powder particle size made by recycling (5) is <500 µm.

## Patentansprüche

1. Ein Verfahren zum Recycling von Alttonern (1), wobei das Verfahren die mechanische Zerkleinerung der Alttoner (1) in einer Vorrichtung zur mechanischen Zerkleinerung (3) unter atmosphärischen Bedingungen sowie das Sieben der zerkleinerten Alttoner (6) in einer Siebvorrichtung (4) umfasst, **dadurch gekennzeichnet, dass** dem Alttoner (1) unmittelbar vor dem Einbringen in die Vorrichtung zur mechanischen Zerkleinerung (3) der Zusatzstoff Kalzit (2) in einer Menge von 5 % bis 12 % der Gesamtmasse der dem Zerkleinerungsprozess zugeführten Alttoner zugesetzt wird, um die Explosionsgefahr auszuschließen, und dass nach dem Siebvorgang in der Siebvorrichtung (4) durch das Recycling ein Pulver (5) erhalten wird, das aus einem Gemisch von Zusatzstoffen und Alttonerpulver besteht.

2. Pulver, hergestellt durch das Recycling von Alttonern gemäß dem Verfahren nach Anspruch 1, **dadurch gekennzeichnet, dass** das Pulver einen Calcium-Massenanteil von 3 bis 35 % sowie einen Massenanteil an organischem Gesamtkohlenstoff von 6 bis 40 % aufweist und dass die Partikelgröße des durch das Recycling gewonnenen Pulvers (5) weniger als 500 µm beträgt.

## Revendications

1. Un procédé de recyclage des toners usagés (1) dans lequel le procédé comprend le broyage mécanique dans le dispositif de broyage mécanique (3) en atmosphère ouverte et le tamisage dans le dispositif de tamisage (4) des toners usagés broyés (6) **est caractérisé en ce que**, juste avant l'introduction des toners usagés (1) dans le dispositif de broyage mécanique (3), l'additif de calcite (2) est ajouté afin d'éliminer le risque d'explosion, dans une fraction massique de 5 % à 12 % de la masse totale des toners usagés (1) entrant dans le procédé de broyage mécanique dans le dispositif de broyage manuel (3), et qu'après le tamisage dans le dispositif de tamisage manuel (4) par recyclage , une poudre (5) est obtenue, laquelle est un mélange d'additifs et de poudre de toner usagé.

2. Une poudre obtenue par le recyclage des toners usagés selon le procédé selon la revendication 1, **caractérisée en ce que** la poudre contient une fraction massique de calcium de 3 à 35 % et une fraction massique de carbone organique total de 6 à 40 %, et que la taille des particules de la poudre obtenue par recyclage (5) est inférieure à 500 µm.
